(19) 

Europäisches
Patentamt
European
Patent Office
Office européen
des brevets

(11) **EP 4 729 484 A1**

(12) **EUROPEAN PATENT APPLICATION**
published in accordance with Art. 153(4) EPC

(43) Date of publication:
**22.04.2026 Bulletin 2026/17**

(21) Application number: 24939408.1

(22) Date of filing: **21.10.2024**

(51) International Patent Classification (IPC):
*C01G 53/00* (2025.01)   *H01M 4/505* (2010.01)
*H01M 10/0525* (2010.01)   *H01M 4/131* (2010.01)
*H01M 4/525* (2010.01)

(52) Cooperative Patent Classification (CPC):
Y02E 60/10

(86) International application number:
**PCT/CN2024/126157**

(87) International publication number:
**WO 2025/241394 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2024 CN 202410649899**

(71) Applicants:
• **Guangdong Brunp Recycling Technology Co.,
Ltd.**
**Foshan, Guangdong 528137 (CN)**
• **Hunan Brunp Recycling Technology Co., Ltd.**
**Changsha, Hunan 410600 (CN)**

(72) Inventors:
• YU, Haijun
  Foshan, Guangdong 528137 (CN)
• LI, Changdong
  Foshan, Guangdong 528137 (CN)
• WANG, Tao
  Foshan, Guangdong 528137 (CN)
• HUANG, Weiyan
  Foshan, Guangdong 528137 (CN)

(74) Representative: **Westphal, Mussgnug & Partner,
Patentanwälte mbB
Werinherstraße 79
81541 München (DE)**

(54) **TERNARY POSITIVE ELECTRODE MATERIAL PRECURSOR, PREPARATION METHOD AND USE**

(57)   Disclosed are a ternary cathode material precursor, a preparation method, and use thereof, which relates to the technical field of cathode materials for lithium-ion batteries. The ternary cathode material precursor has a general formula of $Ni_aCo_bM_{1-a-b}(OH)_2$, where $0.3 \leq a < 0.98$, $0 < b < 0.5$, $0 < 1-a-b < 0.5$, and M is at least one of Mn or Al; wherein the ternary cathode material precursor includes effective pores which water is allowed to enter under a standard atmospheric pressure and ineffective pores which water is not allowed to enter under a standard atmospheric pressure; the ternary cathode material precursor has an effective specific pore volume ratio of 75% to 90%. The ternary cathode material precursor prepared in the present disclosure has a small residual amount of impurities in the precursor. When it is used to prepare the cathode materials, it is beneficial for lithium to enter the interior of the material, thereby forming a cathode material with complete crystallization and uniform element distribution. When the cathode material prepared therefrom is used in lithium-ion batteries, the lithium-ion batteries will have superior cycle stability and rate performance.

EP 4 729 484 A1

Figure 1

**Description**

**CROSS-REFERENCE TO RELATED APPLICATION**

The present disclosure claims priority to Chinese patent application No. 202410649899.3 filed with the Chinese National Intellectual Property Administration on May 24, 2024, entitled "TERNARY CATHODE MATERIAL PRECURSOR, PREPARATION METHOD, AND USE THEREOF", whose contents are incorporated herein by reference in their entirety.

**TECHNICAL FIELD**

The present disclosure relates to the technical field of cathode materials for lithium-ion batteries, and in particular, to a ternary cathode material precursor, a preparation method, and use thereof.

**BACKGROUND**

In order to solve the environmental problems caused by the use of fossil fuels in automobiles, new energy vehicles have attracted much attention due to their advantages in green and sustainable development. As the power support for new energy vehicles, the rapid development of lithium-ion batteries has driven the rapid development of ternary cathode materials. Ternary cathode materials have the advantages of high specific capacity, moderate price, low toxicity and relatively abundant resources.

Ternary cathode materials are usually made by mixing and calcining the ternary cathode material precursor, nickel cobalt manganese hydroxide or nickel cobalt aluminum hydroxide with a lithium source. The appearance of the ternary cathode material precursor is usually a porous spheroid, which is composed of secondary particles formed by the interconnection of primary particles. Its porous structure is formed by the internal spaces created via the interconnection of primary particles during their agglomeration. In order to improve the transport efficiency of lithium ions, the specific pore volume and specific surface area are usually increased by those skilled in the art to increase the number of active sites. However, in some cases, the increase in specific pore volume or specific surface area will reduce the transport efficiency of lithium ions, thereby affecting the accuracy of the performance prediction of the ternary cathode material, failing to obtain a ternary cathode material with better performance.

In view of this, the present disclosure is provided.

**SUMMARY**

An objective of the present disclosure is to provide a ternary cathode material precursor, a preparation method, and use thereof, so as to improve the lithium ion transport efficiency of the corresponding ternary cathode material.

The present disclosure is implemented in such as a way as follows.

In a first aspect, the present disclosure provides a ternary cathode material precursor which has a general formula of $Ni_aCo_bM_{1-a-b}(OH)_2$, where $0.3 \leq a < 0.98$, $0 < b < 0.5$, $0 < 1-a-b < 0.5$, and M is at least one of Mn or Al; wherein the ternary cathode material precursor includes effective pores which water is allowed to enter under a standard atmospheric pressure and ineffective pores which water is not allowed to enter under a standard atmospheric pressure; the ternary cathode material precursor has an effective specific pore volume ratio of 75% to 90%; and

wherein the effective specific pore volume ratio = $V_{effective}/V_{pore} \times 100\%$, $V_{effective}$ represents a specific pore volume of the effective pores in $cm^3/g$, $V_{ineffective}$ represents a specific pore volume of the ineffective pores in $cm^3/g$; and $V_{pore} = V_{effective} + V_{ineffective}$.

In some embodiments, the ternary cathode material precursor satisfies at least one of the following (1) to (6):

(1) $V_{pore}$ is 0.01 $cm^3/g$ to 0.06 $cm^3/g$;
(2)

$$V_{effective} = V_{total} - V_{displace}, \quad V_{pore} = V_{total} - V_{material};$$

wherein,

$$V_{total} = V_{material} + V_{effective} + V_{ineffective},$$

and $V_{total}$ represents a volume of mercury displaced per unit mass of the ternary cathode material precursor when immersed in mercury, in $cm^3/g$;

$$V_{displace} = V_{material} + V_{ineffective},$$

and $V_{displace}$ represents a volume of water displaced per unit mass of the ternary cathode material precursor when immersed in water, in $cm^3/g$; and
$V_{material}$ is a reciprocal of a density of the ternary cathode material precursor;

(3) test processes of $V_{effective}$ and $V_{pore}$ are each performed at a temperature of 4 °C to 80 °C ;
(4) the ternary cathode material precursor has a $D_{50}$ of 8 $\mu$m to 12 $\mu$m;
(5) the ternary cathode material precursor has a specific surface area of 6.4 $m^2/g$ to 7.5 $m^2/g$; and
(6) the ternary cathode material precursor has a tap density of 1.9 $g/cm^3$ to 2.3 $g/cm^3$.

In some embodiments, a total weight percentage of sodium and sulfur elements in the ternary cathode material precursor is less than 0.21 wt%; and/or,

a weight percentage of sodium element in the ternary cathode material precursor is less than 0.03 wt%; and/or,
a weight percentage of sulfur element in the ternary cathode material precursor is less than 0.21 wt%.

In a second aspect, the present disclosure provides a method for preparing the ternary cathode material precursor described in the aforementioned embodiments, which includes:

preparation of crystal seeds: preparing nanocrystal seeds of the ternary cathode material precursors by a coprecipitation method under supergravity conditions; and
growth of crystal seeds: growing the nanocrystal seeds to obtain the ternary cathode material precursor.

In some embodiments, steps of the preparation of the crystal seeds include: placing ammonia water with a pH of 10 to 11 as a reaction base solution in a rotating bed reactor, adding a nickel-cobalt-M mixed salt solution and a mixed aqueous solution containing a precipitant and a complexing agent placed in two liquid storage tanks of the rotating bed respectively to the rotating bed reactor in a cocurrent flow to maintain a pH at 10.5 to 11.5, stopping feeding and rotating of the rotating bed when a precipitate reaches a first preset particle size, then standing and aging to obtain a first reaction solution containing the crystal seeds; wherein the steps of the preparation of the crystal seeds further satisfies at least one of the following A to I:

A: the first preset particle size has a $D_{50}$ of 200 nm to 500 nm;

B: in the mixed aqueous solution, the precipitant has a concentration of 3 mol/L to 5 mol/L, and the complexing agent has a concentration of 1.5 mol/L to 2.5 mol/L;

C: the rotating bed has a rotation speed of 1000 rpm to 1500 rpm;

D: the salt in the nickel-cobalt-M mixed salt solution is one of nitrate, hydrochloride or sulfate;

E: a molar ratio of nickel, cobalt and M is 35-98:1-35:1-35;

F: a total concentration of the nickel, cobalt and M elements in the nickel-cobalt-M mixed salt solution is 1.5 mol/L to 2.5 mol/L;

G: the nickel-cobalt-M mixed salt solution has a flow rate of 50 mL/min to 100 mL/min;

H: the precipitant is potassium hydroxide or sodium hydroxide; and

I: the complexing agent is one of ammonia water, ammonium nitrate, ammonium sulfate and ammonium chloride.

In some embodiments, steps of the growth of the crystal seeds includes: adjusting a pH of the first reaction solution containing the crystal seeds to 9.5 to 10.5, adding the nickel-cobalt-M mixed salt solution, an aqueous solution of the crystal form regulator, and the mixed aqueous solution containing the precipitant and the complexing agent to the first reaction solution containing the crystal seeds to obtain a second reaction solution, and maintaining a pH of the second reaction solution at 9.5 to 10.5 and a concentration of ammonia at 0.4 mol/L to 0.8 mol/L, stopping feeding when a precipitate reaches a second preset particle size, then standing and aging to obtain a slurry containing the ternary cathode material precursor; wherein, the steps of the growth of the crystal seeds further satisfies at least one of the following a-f:

a: the crystal form regulator is an anionic surfactant;

b: a concentration of the aqueous solution of the crystal form regulator is 0.01 mol/L to 0.05 mol/L;

c: the nickel-cobalt-M mixed salt solution has a flow rate of 0.2 mL/min to 0.5 mL/min;

d: the aqueous solution of the crystal form regulator has a flow rate of 0.2 mL/min to 0.5 mL/min;

e: the second preset particle size has a $D_{50}$ of 8 $\mu$m to 12 $\mu$m; and

f: the steps further comprises: subjecting the slurry containing the ternary cathode material precursor to solid-liquid separation, and then washing a resulting solid phase with an alkali solution and pure water, followed by drying, sieving and demagnetizing to obtain the ternary cathode material precursor.

In some embodiments, the crystal form regulator is selected from the group consisting of sodium polyacrylate and sodium lignosulfonate; and/or,
the alkali solution is a sodium hydroxide solution or a potassium hydroxide solution with a concentration of 50 g/L to 70 g/L and a temperature of 50 °C to 80 °C.

In a third aspect, the present disclosure provides a ternary cathode material, which is obtained by mixing the ternary cathode material precursor described in the aforementioned embodiments or the ternary cathode material precursor prepared by the preparation method described in any of the aforementioned embodiments with a lithium source and then calcining a resulting mixture, wherein the ternary cathode material further satisfies at least one of the following g-i:

g: the ternary cathode material has an effective specific pore volume ratio of 75% to 90%;
h: the ternary cathode material has a specific surface area of 0.4 $m^2$/g to 0.7 $m^2$/g; and
i: the ternary cathode material has a tap density of 2.6 g/cm$^3$ to 2.9 g/cm$^3$.

In some embodiments, the ternary cathode material has an initial discharge specific capacity of 192 mAh/g to 208 mAh/g at 1 C; and/or,

the ternary cathode material has an initial discharge specific capacity of 167 mAh/g to 190 mAh/g at 1 C; and/or,

the ternary cathode material has a capacity retention rate after 100 cycles of 85% to 97% at 1 C; and/or,

the ternary cathode material has an initial discharge specific capacity of 142 mAh/g to 165 mAh/g at 5 C.

In a fourth aspect, the present disclosure provides a method for preparing the ternary cathode material, which is obtained by mixing the ternary cathode material precursor described in any of the aforementioned embodiments or the ternary cathode material precursor prepared by the preparation method described in any of the aforementioned embodiments with a lithium source and then calcining a resulting mixture.

In some embodiments, the calcination is carried out at 400 °C to 800 °C for 15 h to 20 h.

In some embodiments, the calcination includes a first stage calcination and a second stage calcination, wherein the first stage calcination is carried out at 400 °C to 600 °C for 4 h to 6 h; and the second stage calcination is carried out 750 °C to 800 °C for 10 h to 14 h.

In some embodiments, a heating rate of the calcination is 1.5 °C/min to 2.5 °C/min.

In a fifth aspect, the present disclosure provides a cathode sheet including the cathode material described in the aforementioned embodiments.

In a sixth aspect, the present disclosure provides a cell, wherein the cell includes the cathode sheet described in the aforementioned embodiments.

In a seventh aspect, the present disclosure provides a lithium-ion battery including the cathode sheet described in the aforementioned embodiments.

In an eighth aspect, the present disclosure provides an electrical device comprising the lithium-ion battery described in the aforementioned embodiments.

The present disclosure has the following beneficial effects:
The effective specific pore volume ratio of the ternary cathode material precursor prepared in the present disclosure is 75% to 90%, which is conducive to reducing the residual amount of impurities in the precursor. When it is used to prepare the cathode materials, it is beneficial for lithium to enter the interior of the material, thereby forming a cathode material with complete crystallization and uniform element distribution. When the cathode material prepared therefrom is used in lithium-ion batteries, the lithium-ion batteries will have superior cycle stability and rate performance.

## BRIEF DESCRIPTION OF DRAWINGS

In order to more clearly explain the technical solution of the examples of the present disclosure, a brief introduction will be given below to the accompanying drawings required to be used in the examples. It should be understood that the following accompanying drawings only illustrate certain examples of the present disclosure, and therefore should not be regarded as restrictions on the scope. For those ordinarily skilled in the art, other relevant accompanying drawings can also be obtained based on these drawings without creative efforts.

Figure 1 shows the appearance or cross-sectional view of the material prepared in Example 1 (Panel A is the SEM image of the precipitate before aging when preparing the crystal seeds; Panel B is the SEM image of the crystal seeds; Panel C is the SEM image of the ternary cathode material precursor; Panel D is the cross-sectional view of the ternary cathode material precursor; Panel E is the SEM image of the ternary cathode material; and Panel F is the cross-sectional view of the ternary cathode material);

Figure 2 shows the cross-sectional view of the ternary cathode material after 100 cycles (Panel A is the ternary cathode material prepared in Example 1;and Panel B is the ternary cathode material prepared in Comparative Example 4);

Figure 3 shows the cross-sectional view of the ternary cathode material precursor prepared in Comparative Example 1; and

Figure 4 shows the SEM image of the ternary cathode material precursor prepared in Comparative Example 5.

## DETAILED DESCRIPTION

In order to more clearly illustrate the objectives, technical solutions, and advantages of the examples of the present disclosure, a clear and complete description of the technical solutions in the examples of the present disclosure will be made below. The conventional conditions or conditions recommended by the manufacturers shall be followed unless specific conditions are specified in the examples. The reagents or instruments used of which the manufacturers are not indicated, are all commercially available conventional products.

In a first aspect, the present disclosure provides a ternary cathode material precursor which has a general formula of $Ni_aCo_bM_{1-a-b}(OH)_2$, where $0.3 \leq a < 0.98$, $0 < b < 0.5$, $0 < 1-a-b < 0.5$, and M is at least one of Mn or Al; wherein the ternary cathode material precursor includes effective pores which water is allowed to enter and ineffective pores which water is not allowed to enter; the ternary cathode material precursor has an effective specific pore volume ratio of 75% to 90%;

wherein the effective specific pore volume ratio = $V_{effective}/V_{pore} \times 100\%$, $V_{effective}$ represents a specific pore volume of the effective pores in $cm^3/g$, $V_{ineffective}$ represents a specific pore volume of the ineffective pores in $cm^3/g$; $V_{pore} = V_{effective} + V_{ineffective}$.

The ternary cathode material precursor is composed of secondary particles formed by the interconnection of primary particles. Its porous morphology is formed by the internal spaces created via the interconnection of primary particles during their agglomeration. Some of the internal spaces are enclosed to form closed pores. These internal closed pores will be inherited to the cathode material after lithium addition and sintering. On the one hand, these closed pores may reduce the internal stress generated during the charging and discharging process of the lithium batteries and inhibit the generation of microcracks; however, on the other hand, these closed pores will also lead to the enclosure of active sites, making it impossible for the lithium source to penetrate and react, and reducing the diffusion rate of lithium ions, which in turn leads to problems such as a decrease in specific capacity and residual impurity elements. Therefore, the size of the closed pores should be within an appropriate range.

In addition, in order to increase the contact area between the active material and the electrolyte, thereby improving the transport efficiency of lithium ions, the specific surface area of the cathode material is often increased in the existing technology. However, the specific surface area is currently usually measured by the $N_2$ adsorption-desorption test. This indicator cannot fully reflect the degree of contact between the material and the liquid, because the wetting degrees of the gas $N_2$ and the liquid (water and electrolyte, etc.) on the material are different, resulting in that some materials have a large specific surface area but a low transport efficiency of lithium ions instead. Therefore, even if the two parameters of specific surface area and specific pore volume are combined in the existing technology, it is still impossible to relatively accurately obtain a ternary cathode material or a ternary cathode material precursor with superior performance.

In the embodiments of the present disclosure, the pores in the ternary cathode material precursor are distinguished, wherein the effective pores refer to the pores that water can enter, and the ineffective pores refer to the pores that water cannot enter. The ineffective pores mainly include closed pores and micropores. Due to the pore size of the micropores is too small, it is more difficult for water or electrolyte to enter. By distinguishing between effective pores and ineffective pores, it is possible to distinguish between pores that may contact with the electrolyte and are conducive to improving the diffusion rate of lithium ions, i.e., the effective pores, and pores that cannot contact with the electrolyte but may release the internal stress generated during the charging and discharging process of the lithium batteries, i.e., the ineffective pores.

In the embodiments of the present disclosure, the effective specific pore volume ratio may be specifically 75%, 77%, 79%, 81%, 83%, 85%, 87%, 89%, 90% or any value between 75% and 90%. If the effective specific pore volume ratio of the ternary cathode material precursor is too large, it is indicated that the interior of the material is more compact or the external pore size of the material is larger. On the one hand, the compact interior is not conducive to the high-temperature solid-phase sintering process of lithium addition, and Li is difficult to enter the interior, resulting in a decrease in the specific capacity; and during use, there is no space as a stress dissipation point, which causes internal cracks in the material, reducing the cycle performance. On the other hand, if the external pore size is too large, the corresponding specific surface area of the obtained cathode material will be too large, resulting in an increase in the interfacial reaction and a decrease in the cycle performance. If the effective specific pore volume ratio of the ternary cathode material precursor is too small, it is indicated that the interior of the material is looser or the external pore size of the material is smaller. On the one hand, the loose interior leads to an increase in the closed pores inside the cathode material, thereby reducing the tap density and reducing the specific capacity; during water washing, water cannot enter the interior, resulting in an increase in the sodium and sulfur element residues, which in turn affects the electrical performance. On the other hand, if the external pore size is too small, the corresponding specific surface area of the obtained cathode material will be too small, resulting in a decrease in contact area between the lithium ions and the electrolyte and a decrease in rate performance.

It should also be noted that when the effective specific pore volume ratio is within the range of 75% to 90%, it is conducive to reducing the residual amount of impurities in the precursor. When it is used to prepare the cathode materials, it is beneficial for lithium to enter the interior of the material, thereby forming a cathode material with complete crystallization and uniform element distribution. When the cathode material prepared therefrom is used in lithium-ion batteries, the lithium-ion batteries will have superior cycle stability and rate performance.

In summary, when the effective specific pore volume ratio of the ternary cathode material precursor prepared in the embodiments of the present disclosure is 75% to 90%, it is conducive to reducing the residual amount of impurities in the precursor; when it is used to prepare the cathode materials, it is beneficial for lithium to enter the interior of the material, thereby forming a cathode material with complete crystallization and uniform element distribution; and it is conducive to improving the cycle stability and transport efficiency of lithium ions of the cathode material prepared therefrom.

In some embodiments, in the ternary cathode material precursor, the $V_{pore}$ is 0.01 $cm^3/g$ to 0.06 $cm^3/g$, specifically it may be 0.01 $cm^3/g$, 0.02 $cm^3/g$, 0.03 $cm^3/g$, 0.04 $cm^3/g$, 0.05 $cm^3/g$, 0.06 $cm^3/g$ or any value between 0.01 $cm^3/g$ and 0.06 $cm^3/g$. The increase in $V_{pore}$ is conducive to the entry of lithium ions into the precursor during the high-temperature solid-phase sintering process of lithium addition. However, if the $V_{pore}$ is too large, the pore structure will also be partially retained in the ternary cathode material, affecting the cycle performance of the ternary cathode material.

In some embodiments, in the ternary cathode material precursor, $V_{effective} = V_{total} - V_{displace}$, wherein,

$$V_{total} = V_{material} + V_{effective} + V_{ineffective},$$

and $V_{total}$ represents a volume of mercury displaced per unit mass of the ternary cathode material precursor when immersed in mercury, in $cm^3/g$;

$$V_{displace} = V_{material} + V_{ineffective},$$

and $V_{displace}$ represents a volume of water displaced per unit mass of the ternary cathode material precursor when immersed in water, in $cm^3/g$; and

$V_{material}$ is the reciprocal of a density of the ternary cathode material precursor.

In the embodiment of the present disclosure, the specific pore volume of the effective pores is determined by measuring $V_{total}$ and $V_{displace}$.

Specifically, $V_{total}$ may be measured by the following method: the liquid level height of mercury in the container containing mercury is measured and recorded as H0. The ternary cathode material precursor is placed in the container containing mercury, since the density of the ternary cathode material precursor is less than that of mercury, the material will float on the liquid surface. A piston with a volume of V' is used to press the material floating on the liquid surface into the liquid below the liquid surface at a speed lower than 50 mm/min, after the liquid surface has come to a standstill, the liquid level height is measured and recorded as H1. Based on H0 and H1 and other shape parameters of the container, the volumes corresponding to the liquid level heights H0 and H1 may be calculated as V0 and V1, respectively, then $V_{total}$ may be calculated according to $V_{total}=V1-V0-V'$. The test principle is as follows: since mercury has low wettability on the ternary cathode material precursor of the present disclosure, there is no capillary effect, and its surface tension is large. Therefore, in the absence of external pressure, it cannot enter the pores below the micrometer level. Therefore, this method may measure the apparent volume relatively accurately. In addition, the $V_{total}$ of the material may also be measured using imaging methods such as three-dimensional imaging.

The method for measuring $V_{displace}$ may make reference to that for $V_{total}$, only except that the liquid is replaced with water, or other equivalent methods may also be used to measure $V_{displace}$.

In some embodiments, in the ternary cathode material precursor, $V_{pore}=V_{total}-V_{material}$. On the premise of obtaining $V_{total}$ through measuring, only the density of the material needs to be measured to calculate $V_{pore}$, which helps to simplify the measuring steps.

In some embodiments, in the ternary cathode material precursor, the measuring processes of $V_{effective}$ and $V_{pore}$ are both performed at a temperature of 4 °C to 80 °C and standard atmospheric pressure. In order to relatively accurately simulate the infiltration of the electrolyte into the cathode material during battery operation, in the embodiments of the present disclosure, the temperature and pressure involved in the measuring processes of $V_{effective}$ and $V_{pore}$ may be within the battery operating temperature range, such as 4 °C to 80 °C and under the standard atmospheric pressure, and the water involved may be deionized water, sodium hydroxide solution, potassium hydroxide solution, ammonia water, etc. In order to enable full contact between the material and the liquid, the mixture of the ternary cathode material precursor and the liquid may be stirred, ultrasonicated, and shaken, etc., but no pressure can be applied. Since it takes a certain amount of time for the liquid to penetrate in the ternary cathode material precursor, when reading the volume of water or mercury displaced by the ternary cathode material precursor, it is necessary to wait until the volume no longer changes before reading the value.

In some embodiments, the $D_{50}$ of the ternary cathode material precursor is 8 μm to 12 μm, specifically it may be 8 μm, 9 μm, 10 μm, 11 μm, 12 μm or any value between 8 μm and 12 μm. The larger the particle size of the ternary cathode material precursor, the larger the particle size of the ternary cathode material prepared therefrom. The larger the particle size of the ternary cathode material, the longer the path required for lithium ion deintercalation, which in turn is not conducive to the improvement of capacity.

In some embodiments, the specific surface area of the ternary cathode material precursor is 6.4 m$^2$/g to 7.5 m$^2$/g, specifically it may be 6.4 m$^2$/g, 6.5 m$^2$/g, 6.7 m$^2$/g, 6.9 m$^2$/g, 7.1 m$^2$/g, 7.3 m$^2$/g, 7.5 m$^2$/g or any value between 6.5 m$^2$/g and 7.5 m$^2$/g. Increasing the specific surface area of the ternary cathode material precursor is conducive to improving the specific surface area of the ternary cathode material and thus conducive to improving the transport efficiency of lithium ions. However, if the specific surface area is too large, the contact area between the ternary cathode material prepared therefrom and the electrolyte will be too large, which in turn may reduce the cycle performance of the ternary cathode material prepared therefrom.

In some embodiments, the tap density of the ternary cathode material precursor is 1.9 g/cm$^3$ to 2.3 g/cm$^3$, specifically it may be 1.9 g/cm$^3$, 2.0 g/cm$^3$, 2.1 g/cm$^3$, 2.2 g/cm$^3$, 2.3 g/cm$^3$ or any value between 1.9 g/cm$^3$ to 2.3 g/cm$^3$. The tap density of the ternary cathode material precursor is closely related to the tap density of the ternary material. The higher the tap density of the ternary cathode material precursor, the higher the tap density of the ternary material under the same conditions, and the higher the energy density.

In some embodiments, a total weight percentage of sodium and sulfur elements in the ternary cathode material precursor is less than 0.21 wt%.

In some embodiments, a weight percentage of sodium element in the ternary cathode material precursor is less than 0.03 wt%.

In some embodiments, a weight percentage of sulfur element in the ternary cathode material precursor is less than 0.21 wt%.

The embodiments of the present disclosure provide a method for preparing the ternary cathode material precursor described in the aforementioned embodiments, which includes:

preparation of crystal seeds: preparing nanocrystal seeds of the ternary cathode material precursors by a coprecipitation method under supergravity conditions; and

growth of crystal seeds: growing the nanocrystal seeds to obtain the ternary cathode material precursor.

In the embodiments of the present disclosure, the nanocrystal seeds of the ternary cathode material precursor are prepared by a coprecipitation method under ultra-gravity conditions. The basic principle is to generate a stable and adjustable strong centrifugal force field through a high-speed rotating annular rotor. In an ultra-gravity environment, molecular diffusion and interphase mass transfer process between molecules of different sizes are much faster than that under a normal gravity field. Materials flow and mix in an ultra-gravity field that is hundreds or thousands of times stronger than the Earth gravity. Under the action of huge shearing force, the liquid is torn into nano-scale droplets, filaments and films, producing a huge phase interface, which increases the mass transfer rate by 1-3 orders of magnitude compared to traditional towers, and significantly enhances the micro-mixing and mass transfer processes. At the same time, when the reaction is performed in an ultra-gravity reactor, the extremely short liquid residence time produces an extremely large supersaturated interface, making the particle size of the products extremely fine and uniform.

The nanoparticles with uniform morphology are prepared by an ultra-gravity coprecipitation method, which are then aged to make their crystal particles further grow or partially agglomerate. Since the particle size is small and uniform, and the particle shape is approximately spherical, the internal structure of the crystal nucleus obtained after aging is relatively compact, thereby reducing the ineffective specific pore volume. Further, when they are used as a crystal nucleus, secondary growth is performed under non ultra-gravity conditions, and the crystals formed on the surface of the crystal nucleus are relatively loose, thereby forming a precursor material that is compact inside and loose outside, and achieving the target effective specific pore volume ratio.

In some embodiments, steps of preparation of the crystal seeds comprises: placing ammonia water with a pH of 10 to 11 as a reaction base solution in a rotating bed reactor, and adding a nickel-cobalt-M mixed salt solution and a mixed aqueous solution containing a precipitant and a complexing agent placed in two liquid storage tanks of the rotating bed respectively to the rotating bed reactor in a cocurrent flow to maintain a pH at 10.5 to 11.5, specifically may be 10.5, 11, 11.5 or any value between 10.5 and 11.5, stop feeding and rotating the rotating bed when a precipitate reaches a first preset particle size, then standing and aging to obtain a first reaction solution containing the crystal seeds.

In the embodiment of the present disclosure, the pH of the reaction base solution may be 10, 10.5, 11 or any value between 10 and 11. A spiral channel type rotating bed may be selected as the rotating bed reactor. The crystal seed structure prepared in the embodiments of the present disclosure is relatively compact, the compact crystal seed structure and the small particle size are conducive to improving the effective specific pore volume ratio of the precursor.

In some embodiments, the $D_{50}$ of the first preset particle size is 200 nm to 500 nm, specifically it may be 200 nm, 300 nm, 400 nm, 500 nm or any value between 200 nm and 500 nm. The smaller particle size of crystal seed is conducive to improving the effective specific pore volume ratio of the precursor.

In some embodiments, a concentration of the precipitant in the mixed aqueous solution is 3 mol/L to 5 mol/L, specifically it may be 3 mol/L, 4 mol/L, 5 mol/L or any value between 3 mol/L and 5 mol/L. A concentration of the complexing agent is 1.5 mol/L to 2.5 mol/L, specifically it may be 1.5 mol/L, 2 mol/L, 2.5 mol/L or any value between 1.5 mol/L and 2.5 mol/L. The precipitant is conducive to increasing the precipitation rate, and complexing agent such as ammonia water, etc., is conducive to controlling the precipitation rate and obtaining crystal seeds with better degree of sphericity.

In some embodiments, the rotation speed of the rotating bed is 1000 rpm to 1500 rpm, specifically it may be 1000 rpm, 1100 rpm, 1200 rpm, 1300 rpm, 1400 rpm, 1500 rpm or any value between 1000 rpm and 1500 rpm. Under the same conditions, increasing the rotation speed of the rotating bed is conducive to reducing the particle size of the crystal seeds and improving the uniformity of the crystal seed particle size distribution. However, if the rotation speed of the rotating bed is too high, the resulting crystal seed structure will be too compact, which will lead to an excessively high effective specific pore volume ratio.

In some embodiments, the salt in the nickel-cobalt-M mixed salt solution is one of nitrates, hydrochlorides or sulfates. The raw materials are of low cost, and the anions are easy to remove.

In some embodiments, a molar ratio of nickel, cobalt and M is 35-98:1-35:1-35, such that the ternary cathode material precursor of the desired composition may be obtained.

In some embodiments, a total concentration of nickel, cobalt and M elements in the nickel-cobalt-M mixed salt solution is 1.5 mol/L to 2.5 mol/L, specifically it may be 1.5 mol/L, 2 mol/L, 2.5 mol/L or any value between 1.5 mol/L and 2.5 mol/L. This is conducive to controlling the precipitation rate within a reasonable range, such that the pore structure of the ternary cathode material precursor may be regulated.

In some embodiments, a flow rate of the nickel-cobalt-M mixed salt solution is 50 mL/min to 100 mL/min, specifically it may be 50 mL/min, 70 mL/min, 90 mL/min, 100 mL/min, or any value between 50 mL/min and 100 mL/min. This is conducive to controlling the precipitation rate within a reasonable range, such that the pore structure of the ternary cathode material precursor may be regulated.

In some embodiments, the precipitant is potassium hydroxide or sodium hydroxide. The raw materials are of low cost, and the cations are easy to remove.

In some embodiments, the complexing agent is one of ammonia water, ammonium nitrate, ammonium sulfate and ammonium chloride. The raw materials are of low cost, and the anions are easy to remove.

In some embodiments, steps of the growth of the crystal seeds comprises: adjusting a pH of the first reaction solution containing the crystal seeds to 9.5 to 10.5, specifically may be 9.5, 10, 10.5 or any value between 9.5 and 10.5, adding the nickel-cobalt-M mixed salt solution, an aqueous solution of a crystal form regulator, and the mixed aqueous solution containing the precipitant and the complexing agent to the first reaction solution containing the crystal seeds to obtain a second reaction solution, and maintaining a pH of the second reaction solution at 9.5 to 10.5 and a concentration of ammonia at 0.4 mol/L to 0.8 mol/L, stopping feeding when a precipitate reaches a second preset particle size, then standing and aging to obtain a slurry containing the ternary cathode material precursor.

Adding a crystal form regulator for a secondary growth is conducive to the formation of looser flake crystals on the surface of the crystal seeds, which is more conducive to the formation of a precursor material that is compact inside and loose outside, thereby achieving the target effective specific pore volume ratio.

In some embodiments, the crystal form regulator is an anionic surfactant, which may electrostatically coordinate with the positively charged active crystal faces of the precursor crystals, thereby inhibiting the growth of the crystal faces and forming flaky crystals.

In some embodiments, a concentration of an aqueous solution of the crystal form regulator is 0.01 mol/L to 0.05 mol/L, specifically it may be 0.01 mol/L, 0.02 mol/L, 0.03 mol/L, 0.04 mol/L, 0.05 mol/L or any value between 0.01 mol/L and 0.05 mol/L. Under the same conditions, the higher the concentration of the crystal form regulator, the higher the concentration of the crystal form regulator in the reaction solution, the looser the exterior of the obtained ternary cathode material precursor, the higher the effective specific pore volume ratio as well, and the less the residual amount of the impurity elements inside the material.

In some embodiments, in the steps of the growth of the crystal seeds, a flow rate of the nickel-cobalt-M mixed salt solution is 0.2 mL/min to 0.5 mL/min, specifically it may be 0.2 mL/min, 0.3 mL/min, 0.4 mL/min, 0.5 mL/min or any value between 0.2 mL/min and 0.5 mL/min. Adjusting the flow rate of the nickel-cobalt-M mixed salt solution is conducive to controlling the precipitation rate within a reasonable range, such that the pore structure of the ternary cathode material precursor may be regulated.

In some embodiments, in the steps of the growth of the crystal seeds, a flow rate of the aqueous solution of the crystal form regulator is 0.2 mL/min to 0.5 mL/min, specifically it may be 0.2 mL/min, 0.3 mL/min, 0.4 mL/min, 0.5 mL/min or any value between 0.2 mL/min and 0.5 mL/min. Under the same conditions, the higher the flow rate of the crystal form regulator, the higher the concentration of the crystal form regulator in the reaction solution, the looser the exterior of the obtained ternary cathode material precursor, the higher the effective specific pore volume ratio as well, and the less the residual amount of the impurity elements inside the material.

In some embodiments, the $D_{50}$ of the second preset particle size is 8 $\mu$m to 12 $\mu$m, which is the particle size of the ternary cathode material precursor.

In some embodiments, the steps of the growth of the crystal seeds further includes subjecting the slurry containing the ternary cathode material precursor to solid-liquid separation, then washing a resulting solid phase successively with an alkali solution and pure water, followed by drying, sieving and demagnetizing to obtain the ternary cathode material precursor. When the ternary cathode material precursor is washed with the alkali solution and pure water, the impurities such as sodium, potassium, sulfur, nitrogen, and chlorine, introduced into the material along with the nickel-cobalt-M mixed salt solution, precipitant, and complexing agent may be removed.

In some embodiments, the crystal form regulator is selected from the group consisting of sodium polyacrylate and sodium lignosulfonate. Compared with small molecular anionic surfactants, the polyanionic surfactants such as sodium polyacrylate and sodium lignosulfonate may increase steric hindrance, making the flaky crystals formed on the surface looser, thereby forming more effective specific pore volume.

In some embodiments, the alkali solution is a sodium hydroxide solution or a potassium hydroxide solution with a concentration of 50 g/L to 70 g/L and a temperature of 50 °C to 80 °C. The purpose of alkali washing is to remove sulfur. Before alkali washing, sulfate radical exists in the solid phase in the form of double salt, and alkali washing uses hydroxide radical to replace sulfate radical, avoiding loss of Ni caused by direct water washing.

Specifically, the alkali solution may be selected according to the type of impurities in the ternary cathode material precursor. If the impurities include sodium element, sodium hydroxide may be selected as the alkali solution; and if the impurities include potassium element, potassium hydroxide may be selected as the alkali solution. Appropriately increasing the temperature is conducive to the removal of impurities.

The present disclosure provides a ternary cathode material, which is obtained by mixing the ternary cathode material precursor described in the aforementioned embodiments or the ternary cathode material precursor prepared by the preparation method described in any of the aforementioned embodiments with a lithium source and then calcining a resulting mixture.

In some embodiments, the effective specific pore volume ratio of the ternary cathode material is 75% to 90%, specifically it may be 75%, 77%, 79%, 81%, 83%, 85%, 87%, 89%, 90% or any value between 75% and 90%. If the effective specific pore volume ratio is too high, it may lead to a decrease in cycle performance; and if the effective specific pore volume ratio is too low, it is not conducive to the improvement of the specific capacity and rate performance. When the ratio of the specific pore volume of effective pores to the total specific pore volume, that is, the effective specific pore volume ratio is within the range of 75% to 90%, the cathode material balances the transport efficiency of lithium ions and cycle performance.

In some embodiments, a specific surface area of the ternary cathode material is 0.4 m$^2$/g to 0.7 m$^2$/g, specifically it may be 0.4 m$^2$/g, 0.5 m$^2$/g, 0.6 m$^2$/g, 0.7 m$^2$/g or any value between 0.4 m$^2$/g and 0.7 m$^2$/g. Increasing the specific surface area is conducive to improving the transport efficiency of lithium ions, but if the specific surface area is too large, the contact area with the electrolyte will be excessive, which may reduce the cycle performance.

In some embodiments, a tap density of the ternary cathode material is 2.6 g/cm$^3$ to 2.9 g/cm$^3$, specifically it may be 2.6 g/cm$^3$, 2.7 g/cm$^3$, 2.8 g/cm$^3$, 2.9 g/cm$^3$ or any value between 2.6 g/cm$^3$ to 2.9 g/cm$^3$. The higher the tap density of the ternary cathode material, the higher the energy density. However, if the tap density of the ternary cathode material is too high, the specific pore volume is correspondingly reduced, which will increase the difficulty of lithium ion migration.

In some embodiments, the ternary cathode material has an initial discharge specific capacity of 192 mAh/g to 208 mAh/g at 1 C;

and/or, the ternary cathode material has an initial discharge specific capacity of 167 mAh/g to 190 mAh/g at 1 C;

and/or, the ternary cathode material has a capacity retention rate after 100 cycles of 85% to 97% at 1 C;

and/or, the ternary cathode material has an initial discharge specific capacity of 142 mAh/g to 165 mAh/g at 5 C.

The present disclosure provides a method for preparing the ternary cathode material, which is obtained by mixing the ternary cathode material precursor described in any of the aforementioned embodiments or the ternary cathode material precursor prepared by the preparation method described in any of the aforementioned embodiments with a lithium source and then calcining a resulting mixture.

In some embodiments, the calcination is carried out at 400 °C to 800 °C, specifically it may be 400 °C, 500 °C, 600 °C, 700 °C, 800 °C, or any value between 400 °C and 800 °C; the calcination is carried out for 15 h to 20 h, and specifically it may be 15 h, 16 h, 17 h, 18 h, 19 h, 20 h or any value between 15 h and 20 h.

In some embodiments, the calcination includes a first stage calcination and a second stage calcination. The first stage calcination is carried out at 400 °C to 600 °C, such as 400 °C, 500 °C, or 600 °C, etc. The first stage calcination is carried out for 4 h to 6 h, such as 4 h, 5 h, or 6 h, etc. The second stage calcination is carried out at 750 °C to 800 °C, such as 750 °C, 760 °C, 770 °C, 780 °C, 790 °C, or 800 °C, etc. The second stage calcination is carried out for 10 h to 14 h, such as 10 h, 11 h, 12 h, 13 h, or 14 h, etc.;

In some embodiments, a heating rate of the calcination is 1.5 °C/min to 2.5 °C/min, such as 1.5 °C/min, 2 °C/min, or 2.5 °C/min, etc.

The present disclosure provides a cathode sheet including the cathode material described in the aforementioned embodiments.

In the cathode sheet of the present disclosure, the cathode material layer generally includes the cathode material, a binder, and a conductive agent, and is generally formed by coating a cathode slurry, then drying, and cold pressing the same. The cathode slurry is usually formed by dispersing the cathode material, the conductive agent, and the binder, etc., in a solvent and stirring a resulting mixture evenly. The solvent may be N-methylpyrrolidone (NMP).

In some optional embodiments, based on a total weight of the cathode material layer, the cathode material layer may contain 70 wt % to 97 wt % of the cathode material. Optionally, the weight proportion of the cathode material in the cathode material layer is 85% to 97%, 90% to 97%, or 95% to 97%. By adjusting the proportion of the cathode material in the cathode material layer, the energy density and cycle lifetime of the lithium-ion batteries may be further improved.

In some embodiments, the binder of the cathode material layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or modified polymers thereof.

The conductive agent may improve the electron conduction performance of the cathode material layer. In some optional embodiments, based on the total weight of the cathode material layer, the cathode material layer may contain 2 wt% to 20 wt% of the conductive agent. Optionally, the weight proportion of the conductive agent in the cathode material layer is 2% to 10%, or 2% to 5%.

In some embodiments, the conductive agent of the cathode material layer may include one or more of superconducting carbon, carbon black such as Super P, acetylene black, Ketjen black, carbon dots, carbon nanotubes, graphene, and carbon nanofibers.

It should be noted that the composition or parameters of the cathode material layers given in the present disclosure refer to the composition or parameter range of the single-sided film layer of the cathode current collector. When the cathode material layer is provided on two opposite surfaces of the cathode current collector, the composition or parameters of the cathode material layer on any one of the surfaces satisfy the present disclosure and are considered to fall within the scope of protection of the present disclosure.

The present disclosure provides a lithium-ion battery, which includes the cathode sheet described in the aforementioned embodiments, and further includes an anode sheet, an electrolyte, and a separator.

[Anode sheet]

The anode sheet of the present disclosure includes an anode current collector and an anode film layer disposed on at least one surface of the anode current collector.

As an example, the anode current collector has two surfaces that are opposite in the direction of its own thickness, and the anode film layer is laminated on either or both of the two opposite surfaces of the anode current collector.

The anode current collector may use a material with good electrical conductivity and mechanical strength, which plays the role of electric conduction and current collection. In some embodiments, the anode current collector may use a copper foil.

In the anode sheet of the present disclosure, the anode film layer generally includes an anode active material, a binder, a conductive agent, and other optional auxiliary agents. It is usually made by coating an anode slurry on the anode current collector, then drying and cold pressing the same. The anode slurry is usually formed by dispersing the anode material, a conductive agent, a binder, and optional auxiliary agents, etc., in a solvent and stirring a resulting mixture evenly. The solvent may be N-methylpyrrolidone (NMP) or deionized water.

In some embodiments, the anode active material may include one or more of artificial graphite, natural graphite, silicon-based materials, or tin-based materials. Optionally, the anode active material includes one or more of artificial graphite or natural graphite. Optionally, the anode active material includes artificial graphite.

In some embodiments, the conductive agent may include one or more of superconducting carbon, carbon black such as Super P, acetylene black, Ketjen black, carbon dots, carbon nanotubes, graphene, or carbon nanofibers.

In some embodiments, the binder may include one or more of styrene-butadiene rubber (SBR), aqueous acrylic resin, polyvinyl alcohol (PVA), sodium alginate (SA), or carboxymethyl chitosan (CMCS).

In some embodiments, other optional auxiliary agents include, for example, a thickener such as sodium carboxymethyl cellulose (CMC-Na), or a PTC thermistor material, etc.

[Electrolyte]

The electrolyte plays the role of conducting ions between the cathode sheet and the anode sheet. The present disclosure has no specific limitation on the type of electrolyte, which may be selected according to needs. For example, the electrolyte may be an electrolyte solution. The electrolyte solution includes an electrolyte salt and a solvent.

In some embodiments, the electrolyte salt may be one or more of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl) imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO$_2$F$_2$), lithium difluorobis(oxalate)phosphate (LiDFOP) or lithium tetrafluoro(oxalato)phosphate (LiTFOP).

In some embodiments, the solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) or diethyl sulfone (ESE).

In some embodiments, the electrolyte solution may also optionally include an additive. For example, the additive may include an anode film-forming additive, or a cathode film-forming additive, and may further include an additive that may improve certain properties of the battery, such as an additive that improves the overcharge performance of the battery, an additive that improves the high temperature performance of the battery, and an additive that improves the low temperature performance of the battery, etc.

[Separator]

The separator is disposed between the cathode sheet and the anode sheet to play a separation role. The lithium-ion battery of the present disclosure has no special limitation on the type of separator, and any well-known separator with a porous structure for lithium-ion batteries may be used. For example, the separator may be one or more of a glass fiber film, a non-woven fabric film, a polyethylene film, a polypropylene film, a polyvinylidene fluoride film, or a multilayer composite film comprising one or more than two of the above.

The cathode sheet, the anode sheet and the separator may be made into an electrode assembly through a lamination process or a winding process, and the separator is arranged between the cathode sheet and the anode sheet to play a separating role. The electrode assembly is placed in an outer package, which is then filled with the electrolyte solution and sealed to obtain a lithium-ion battery.

The outer package of the lithium-ion battery is used to encapsulate the electrode assembly and the electrolyte. In some embodiments, the outer package of the lithium-ion battery may be a hard shell, such as a hard plastic shell, an aluminum shell, and a steel shell, etc. The outer package of the lithium-ion battery may also be a pouch, such as a bag-type pouch. The material of the pouch may be made of plastic, for example including one or more of polypropylene (PP), polybutylene terephthalate (PBT), or polybutylene succinate (PBS), etc.

The present disclosure has no special limitation on the shape of the lithium-ion battery, which may be cylindrical, square, or any other shapes.

In some embodiments, the lithium-ion batteries may be assembled into a battery module, which may contain multiple lithium-ion batteries. The specific number of the lithium-ion batteries may be adjusted according to the application and capacity of the battery module.

In some embodiments, the battery modules described above may also be assembled into a battery pack. The number of battery modules contained in the battery pack may be adjusted according to the application and capacity of the battery pack.

The present disclosure provides an electrical device including the lithium-ion battery described in the aforementioned embodiments.

The present disclosure also provides an electrical device, which includes at least one of the lithium-ion battery, the battery module, or the battery pack described in the present disclosure. The lithium-ion battery, the battery module or the battery pack may be used as a power source for the device, or may also be used as an energy storage unit for the device. The device may be, but is not limited to, a mobile device such as a mobile phone, a laptop computer, etc., an electric vehicle such as a full electric vehicle, a hybrid electric vehicle, a plug-in hybrid electric vehicle, an electric bicycle, an electric scooter, an electric golf cart, or an electric truck, etc., an electric train, a ship a satellite, and an energy storage system, etc. The lithium-ion battery, the battery module, or the battery pack may be selected for the device according to its usage needs.

The features and performance of the present disclosure are further described in detail below with reference to the Examples.

Example 1

A method for preparing a lithium ion battery included the following steps.

(1) Preparation of nanocrystal seeds by a coprecipitation method under ultra-gravity conditions

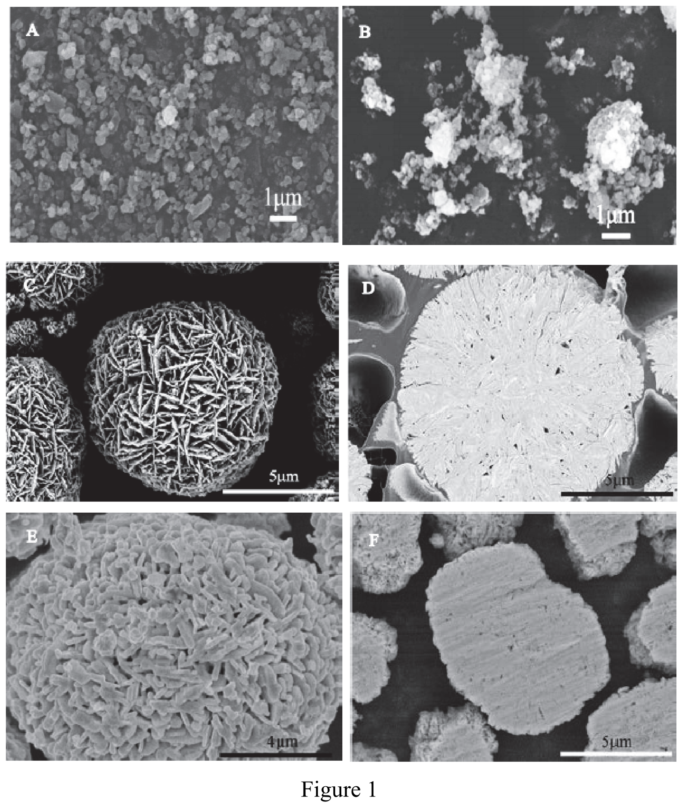

Nickel sulfate, cobalt sulfate, and manganese sulfate with a molar ratio of nickel to cobalt to manganese of 80:10:10 were weighed and dissolved in deionized water to obtain a nickel-cobalt-manganese mixed salt solution with a total molar concentration of cations of 2 M, which was then transferred to a first liquid storage tank of a spiral channel type rotating bed. A mixed aqueous solution with concentrations of sodium hydroxide and ammonia of 4 M and 2 M, respectively was prepared and then transferred to a second liquid storage tank. 100 mL of ammonia water with a pH of 10.5 as a reaction base solution was pre-added to the reactor, by adjusting a rotation speed of the rotating bed to 1200 rpm, the solution in the first liquid storage tank was pumped into the rotating bed reactor via a pump at a speed of 80 mL/min, and the solution in the second liquid storage tank was pumped into the rotating bed reactor via a pump to control a pH to be maintained at 11. A centrifugal pump was started to circulate the mixed solution in an ultra-gravity device. When a $D_{50}$ reached 350 nm, the feeding of the solutions in the first and second liquid storage tanks was stopped and the rotating of the rotating bed was stopped as well to obtain a precipitate, which was stood and aged for 8 h to obtain a first reaction solution containing crystal seeds. The SEM of the precipitate is shown in Panel A of Figure 1, as can be seen, the particle size of the precipitate is small. The SEM of the crystal seeds is shown in Panel B of Figure 1, as can be seen, the particles of the precipitate aggregates into crystal seeds and the particle size become larger.

(2) Preparation of a ternary cathode material precursor

The above first reaction solution containing the crystal seeds was transferred to a reaction vessel, the reaction temperature was adjusted to 80 °C, and sulfuric acid was added to adjust a pH to 10, and the nickel-cobalt-manganese mixed salt solution and a 0.03 M of aqueous sodium lignosulfonate solution as an aqueous solution of crystal form regulator were continuously added to the reaction vessel in a cocurrent flow at a uniform rate of 0.3 mL/min via a metering pump, then a mixed solution of sodium hydroxide and ammonia was added to control a concentration of ammonia to 0.5 mol/L and the pH to be maintained at 10, the mixture was stirred with a rotation speed controlled at 500 rpm. When a $D_{50}$

reached 10 μm, the feeding was stopped, and the reaction product was aged for 12 h to obtain a ternary cathode material precursor slurry. The ternary cathode material precursor slurry was press-filtered and then washed successively with hot alkali solution and pure water, dried, sieved and demagnetized to obtain the ternary cathode material precursor $Ni_{0.8}Co_{0.1}Mn_{0.1}(OH)_2$, wherein the hot alkali solution had a temperature of 60 °C and a concentration of 60 g/L, the alkali was sodium hydroxide, and the drying was carried at 130 °C for 5 h. The appearance and cross-sectional views of the ternary cathode material precursor are shown in Panels C and D of Figure 1, respectively. As can be seen, a ternary cathode material precursor with good degree of sphericity, relatively dense interior and loose outer layer is obtained.

(3) Preparation of a ternary cathode material

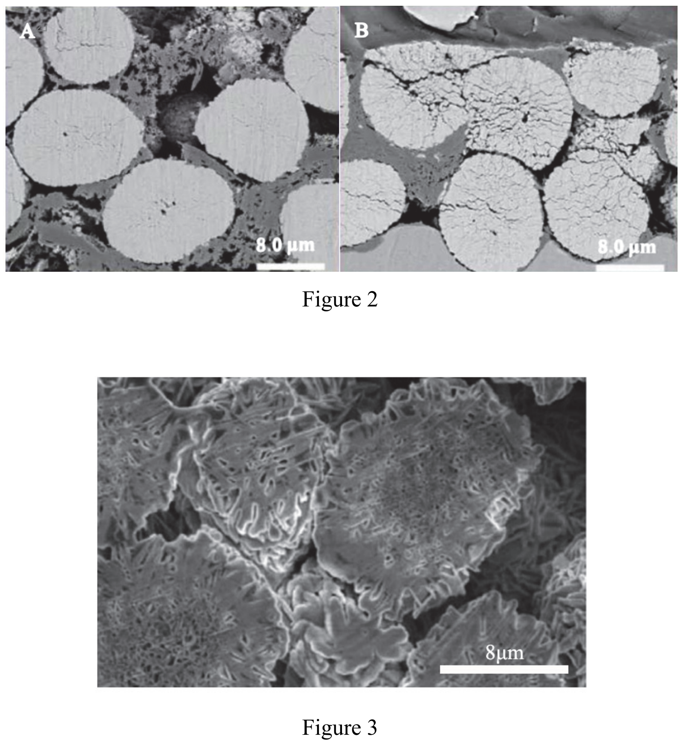

The precursor material and lithium hydroxide were provided according to a molar ratio of Li/(Ni+Co+Mn) of 1.05:1, and mixed uniformly in a high-speed mixer to obtain a mixed powder. The above-mentioned mixed powder was placed in a tubular furnace and calcined under an oxygen atmosphere. During the calcination process, the tubular furnace was first raised to 500 °C at a heating rate of 2 °C/min and held for 5 h, then raised to 780 °C at a heating rate of 2 °C/min and held for 12 h, finally cooled naturally to obtain a black powdery ternary cathode material. The appearance and cross-sectional views of the ternary cathode material are shown in Panels E and F of Figure 1, respectively. As can be seen from the figures, the ternary cathode material has a relatively dense structure and fewer pores. The cross-section of the ternary cathode material after 100 cycles at 1 C is shown in Panel A of Figure 2, as can be seen, only some particles have fine cracks, and the stability is good.

(4) Electrode preparation: The ternary cathode material, conductive carbon black and polyvinylidene Fluoride (PVDF) were weighed at a mass ratio of 8:1:1, ground thoroughly and put into a flask, then an appropriate amount of NMP solvent was added, and the mixture was stirred on a stirrer for 24h to form a uniform slurry. The prepared slurry was evenly coated on a clean aluminum foil using a wet film applicator, with a loading amount controlled at $2.5\pm0.05$ mg/cm$^2$. The coated aluminum foil was then placed in a vacuum drying oven at 100 °C for drying for 24h. The cathode sheet was then placed on an oil hydraulic press and calendared at a pressure of 6 MPa.

(5) Button battery assembly: The prepared cathode sheet was further punched into a circular cathode she-et with a diameter of 12 mm. A metal lithium disc as an anode, Celgard 2300 as a separator, and 1 M of $LiPF_6$ solution (the solvent was a mixed solvent of ethyl methyl carbonate (EMC), ethylene carbonate (EC) and dimethyl carbonate (DMC) at a volume ratio of 1:1:1) as the electrolyte solution were then assembled into a CR2032 button battery.

Example 2

A method for preparing a lithium ion battery included the following steps.

(1) Preparation of nanocrystal seeds by a coprecipitation method under ultra-gravity conditions

Nickel sulfate, cobalt sulfate, and manganese sulfate with a molar ratio of nickel to cobalt to manganese of 80:10:10 were weighed and dissolved in deionized water to obtain a nickel-cobalt-manganese mixed salt solution with a total molar concentration of cations of 2 M, which was then transferred to a first liquid storage tank of a spiral channel type rotating bed. A mixed aqueous solution with concentrations of sodium hydroxide and ammonia of 4 M and 2 M, respectively was prepared and then transferred to a second liquid storage tank. 100 mL of ammonia water with a pH of 10.5 as a reaction base solution was pre-added to the reactor, by adjusting a rotation speed of the rotating bed to 1000 rpm, the solution in the first liquid storage tank was pumped into the rotating bed reactor via a pump at a speed of 50 mL/min, and the solution in the second liquid storage tank was pumped into the rotating bed reactor via a pump to control a pH to be maintained at 11. A centrifugal pump was started to circulate the mixed solution in an ultra-gravity device. When a $D_{50}$ reached 220 nm, the feeding of the solutions in the first and second liquid storage tanks was stopped and the rotating of the rotating bed was stopped as well, which was stood and aged for 12 h to obtain a first reaction solution containing the crystal seeds.

Steps (2) to (5) were the same as those in Example 1.

Example 3

A method for preparing a lithium ion battery included the following steps.

(1) Preparation of nanocrystal seeds by a coprecipitation method under ultra-gravity conditions

Nickel sulfate, cobalt sulfate, and manganese sulfate with a molar ratio of nickel to cobalt to manganese of 80:10:10 were weighed and dissolved in deionized water to obtain a nickel-cobalt-manganese mixed salt solution with a total molar concentration of cations of 2 M, which was then transferred to a first liquid storage tank of a spiral channel type rotating bed. A mixed aqueous solution with concentrations of sodium hydroxide and ammonia of 4 M and 2 M, respectively was prepared and then transferred to a second liquid storage tank. 100 mL of ammonia water with a pH of 10.5 as a reaction base solution was pre-added to the reactor, by adjusting a rotation speed of the rotating bed to 1500 rpm, the solution in the first liquid storage tank was pumped into the rotating bed reactor via a pump at a speed of 100 mL/min, and the solution in the second liquid storage tank was pumped into the rotating bed reactor via a pump to control a pH to be maintained at 11. A centrifugal pump was started to circulate the mixed solution in an ultra-gravity device. When a $D_{50}$ reached 450 nm, the feeding of the solutions in the first and second liquid storage tanks was stopped and the rotating of the rotating bed was stopped as well, which was stood and aged for 6 h to obtain a first reaction solution containing the crystal seeds.

Steps (2) to (5) were the same as those in Example 1.

Example 4

A method for preparing a lithium-ion battery, which differs from Example 1 in that, in step (2), 0.03 M of sodium polyacrylate solution was used instead of 0.03 M of sodium lignosulfonate as the aqueous solution of the crystal form regulator.

Example 5

A method for preparing a lithium-ion battery, which differs from Example 1 in that, in step (2), 0.05 M of sodium lignosulfonate solution was used instead of 0.03 M of sodium lignosulfonate as the aqueous solution of the crystal form regulator.

Example 6

A method for preparing a lithium-ion battery, which differs from Example 1 in that, in step (2), 0.01 M of sodium lignosulfonate solution was used instead of 0.03 M of sodium lignosulfonate as the aqueous solution of the crystal form regulator.

Example 7

A method for preparing a lithium-ion battery, which differs from Example 1 in that, in step (1), the molar ratio of nickel to cobalt to manganese was 50:30:20; in step (2), 0.01 M of sodium polyacrylate solution was used instead of 0.03 M of sodium lignosulfonate as the aqueous solution of the crystal form regulator, the flow rate was changed from 0.3 mL/min to 0.2 mL/min, and the concentration of ammonia was controlled at 0.8 M to obtain the ternary cathode material precursor $Ni_{0.5}Co_{0.3}Mn_{0.2}(OH)_2$.

Comparative Example 1

A method for preparing a lithium ion battery included the following steps.

(1) Preparation of crystal nucleus without using an ultra-gravity coprecipitation method.

100 mL of ammonia water with a pH of 10.5 as a reaction base solution was pre-added to a reaction vessel, a 2 M of nickel-cobalt-manganese mixed salt solution and 0.4 M of ammonia water were added to the reactor in a cocurrent flow at a uniform speed via a metering pump, wherein a flow rate of the nickel-cobalt-manganese mixed salt solution was 80 mL/min. A sodium hydroxide solution was added to control a pH of the reaction solution at 11, and a concentration of ammonia in the reaction solution was controlled at 0.4 mol/L, wherein a stirring speed was 300 rpm, and a temperature of the reaction vessel was 50 °C. The reaction vessel was purged with an inert atmosphere before feeding, and the reaction process was monitored in real time, when a $D_{50}$ of the material was reached 1 $\mu$m, the feeding of the reaction vessel was stopped. After the reaction was completed, the material was aged for 15 h to obtain the crystal seeds.

Steps (2) to (5) were the same as those in Example 1. The cross-sectional view of the obtained ternary cathode material precursor is shown in Figure 3. As can be seen, both the interior and the outer layer of the ternary cathode material precursor have a large number of pores, which reduces the effective specific pore volume ratio and increases the content of impurities.

Comparative Example 2

A method for preparing a lithium-ion battery, which differs from Example 1 in that, sodium dodecylbenzene sulfonate was used instead of sodium lignosulfonate as the crystal form regulator.

Comparative Example 3

A method for preparing a lithium ion battery included: The metal sulfates at a molar ratio of Ni:Co:Mn=0.8:0.1:0.1 were weighed and prepared with deionized water into a mixed salt solution with a total concentration of 2 M. Then NaOH and ammonia water at a molar ratio of 3:1 were prepared with deionized water into a mixed alkali solution with a concentration of NaOH of 0.2 M. Then sodium dodecylbenzene sulfonate was added to the mixed alkali solution at a mass ratio of NaOH to surfactant of 9:1. 100 mL of ammonia water with a pH of 11 was added to a reaction vessel as a reaction base solution, with a stirring speed set to 600 rpm and a reaction temperature to 50 °C. The mixed salt solution and the mixed alkali solution were pumped into the reaction vessel slowly at a constant speed, wherein a flow rate of the nickel-cobalt-manganese mixed salt solution was 80 mL/min, and a pH was kept at 11. The reaction vessel was purged with an inert atmosphere before feeding, and the reaction process was monitored in real time. When a $D_{50}$ reached 6 $\mu$m, the feeding was stopped and aged for 15 h. The resulting ternary cathode material precursor slurry was press-filtered and then washed successively with hot alkali solution and pure water, dried, sieved and demagnetized to obtain the ternary cathode material precursor $Ni_{0.8}Co_{0.1}Mn_{0.1}(OH)_2$.
Steps (2) to (5) were the same as those in Example 1.

Comparative Example 4

A method for preparing a lithium ion battery included the following steps.

(1) Preparation of nanocrystal seeds by a coprecipitation method under ultra-gravity conditions

Nickel sulfate, cobalt sulfate, and manganese sulfate were weighed and dissolved in deionized water to obtain a nickel-cobalt-manganese mixed salt solution with a total molar concentration of cations of 2 M, which was then transferred to a first liquid storage tank of a spiral channel type rotating bed. A mixed aqueous solution with concentrations of sodium hydroxide and ammonia of 4 M and 2 M, respectively was prepared and then transferred to a second liquid storage tank. 100 mL of ammonia water with a pH of 10.5 as a reaction base solution was pre-added to the reactor, by adjusting a rotation speed of the rotating bed to 1800 rpm, the solution in the first liquid storage tank was pumped into the rotating bed reactor via a pump at a speed of 120 mL/min, and the solution in the second liquid storage tank was pumped into the rotating bed reactor via a pump to control a pH to be maintained at 10.5. A centrifugal pump was started to circulate the mixed solution in an ultra-gravity device. When a $D_{50}$ reached 180 nm, the feeding of the solutions in the first and second liquid storage tanks was stopped and the rotating of the rotating bed was stopped as well, which was stood and aged for 12 h to obtain a first reaction solution containing the crystal seeds.
The molar ratio of nickel to cobalt to manganese was 80:10:10.

(2) Preparation of a ternary cathode material precursor

The above first reaction solution containing the crystal seeds was transferred to a reaction vessel, the reaction temperature was adjusted to 80 °C, and sulfuric acid was added to adjust a pH to 10, and the nickel-cobalt-manganese mixed salt solution and a 0.06 M of aqueous sodium lignosulfonate solution as an aqueous solution of crystal form regulator were continuously added to the reaction vessel in a cocurrent flow at a uniform rate of 0.3 mL/min via a metering pump, then a mixed solution of sodium hydroxide and ammonia was added to control the concentration of ammonia to 0.5 mol/L and the pH was maintained at 10, the rotation speed was 500 rpm. When a $D_{50}$ reached 10 $\mu$m, the feeding was stopped, and the reaction product was aged for 12 h to obtain a ternary cathode material precursor slurry. The ternary cathode material precursor slurry was press-filtered and then washed successively with hot alkali solution and pure water, dried, sieved and demagnetized to obtain the ternary cathode material precursor $Ni_{0.8}Co_{0.1}Mn_{0.1}(OH)_2$, wherein the hot alkali solution had a temperature of 60 °C and a concentration of 60 g/L, the alkali was sodium hydroxide, and the drying was carried at 130 °C for 5 h.
Steps (3) to (5) were the same as those in Example 1. The cross-section of the obtained ternary cathode material after 100 cycles at 1 C is shown in Panel B of Figure 2, as can be seen, the cracks in the cathode material particles are significantly increased, and some of the cathode material particles are broken. Compared with Example 1, the cycle stability is significantly reduced.

Comparative Example 5

A method for preparing a lithium ion battery included the following steps.

(1) Preparation of nanocrystal seeds by a coprecipitation method under ultra-gravity conditions

Nickel sulfate, cobalt sulfate, and manganese sulfate with a molar ratio of nickel to cobalt to manganese of 80:10:10 were weighed and dissolved in deionized water to obtain a nickel-cobalt-manganese mixed salt solution with a total molar concentration of cations of 2 M, which was then transferred to a first liquid storage tank of a spiral channel type rotating bed. A mixed aqueous solution with concentrations of sodium hydroxide and ammonia of 4 M and 2 M, respectively was prepared and then transferred to a second liquid storage tank. 100 mL of ammonia water with a pH of 10.5 as a reaction base solution was pre-added to the reactor, by adjusting a rotation speed of the rotating bed to 1500 rpm, the solution in the first liquid storage tank was pumped into the rotating bed reactor via a pump at a speed of 100 mL/min, and the solution in the second liquid storage tank was pumped into the rotating bed reactor via a pump to control a pH to be maintained at 11. A centrifugal pump was started to circulate the mixed solution in an ultra-gravity device. When a $D_{50}$ reached 450 nm, the feeding of the solutions in the first and second liquid storage tanks was stopped and the rotating of the rotating bed was stopped as well, which was stood and aged for 6 h to obtain a first reaction solution containing the crystal seeds.

(2) Preparation of a ternary cathode material precursor

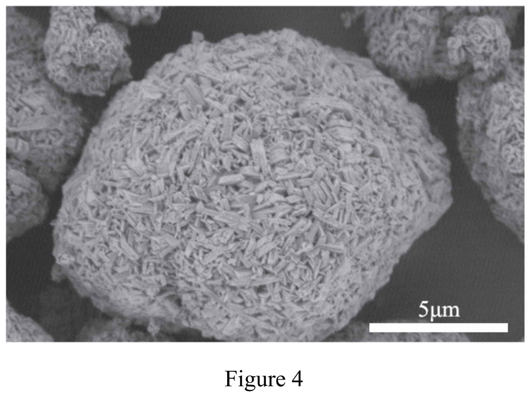

The above first reaction solution containing the crystal seeds was transferred to a reaction vessel, the reaction temperature was adjusted to 80 °C, and sulfuric acid was added to adjust the pH to 10, and the nickel-cobalt-manganese mixed salt solution was continuously added to the reaction vessel in a cocurrent flow at a uniform rate via a metering pump, then a mixed solution of sodium hydroxide and ammonia was added to control the concentration of ammonia to 0.8 mol/L and the pH to be maintained at 10, the rotation speed was 500 rpm. When a $D_{50}$ reached 10 $\mu$m, the feeding was stopped, and the reaction product was aged for 12 h to obtain a ternary cathode material precursor slurry. The ternary cathode material precursor slurry was press-filtered and then washed successively with hot alkali solution and pure water, dried, sieved and demagnetized to obtain the ternary cathode material precursor $Ni_{0.8}Co_{0.1}Mn_{0.1}(OH)_2$, wherein the hot alkali solution had a temperature of 60 °C and a concentration was 60 g/L, the alkali was sodium hydroxide, and the drying was carried at 130 °C for 5 h.
Steps (3) to (5) were the same as those in Example 1.The degree of sphericity of the obtained ternary cathode material precursor is relatively low, the SEM of which is shown in Figure 4.
The performance of the ternary cathode material precursors obtained in the above Examples and Comparative Examples was tested, and the test results are shown in Table 1. The performance of the ternary cathode materials obtained in some of the above Examples and Comparative Examples was tested, and the test results are shown in Table 2. The specific test methods are as follows.

(1) A JEOLJSM-6490LV type scanning electron microscope was used to observe the overall and cross-sectional microstructures of the samples to be tested.

(2) The effective specific pore volume ratio was determined by the following method.

The testing of $V_{total}$: The liquid level height of mercury in the container containing mercury was measured and recorded as H0; the sample to be tested was placed in the container containing mercury. Since the density of the sample to be tested was less than that of mercury, the material will float on the liquid surface. A piston with a volume of V' was used to press the sample to be tested floating on the liquid surface into the liquid below the liquid surface at a speed lower than 50 mm/min. After the liquid surface had come to a standstill, the liquid level height was measured and recorded as H1. Based on H0 and H1 and other shape parameters of the container, the volumes corresponding to the liquid level heights H0 and H1 may be calculated as V0 and V1, respectively, then the $V_{total}$ may be calculated according to $V_{total}$=V1-V0-V'.
The testing method of $V_{displace}$: The volume V0 of pure water was read, the sample to be tested was placed in a measuring cylinder containing deionized water at 25 °C. After the sample to be tested sank to the bottom, it was ultrasonicated for 5 min and then the volume V1 was read, and $V_{displace}$=V1-V0.
The testing method of $V_{material}$: The density of the sample to be tested was measured using a draining method, and the density of the nickel-cobalt-manganese hydroxide was measured to be in the range of 3.4-3.8 g/cm$^3$. That is, the $V_{material}$ of the ternary cathode material precursor was in the range of 0.263-0.294 cm$^3$/g; the density of the lithium nickel cobalt manganese oxide single crystals was in the range of 2.5 to 2.8 g/cm$^3$.That is, the $V_{material}$ of the ternary cathode material was in the range of 0.357-0.400 cm$^3$/g.
The effective specific pore volume ratio was calculated according to the formula: the effective specific pore volume ratio=$(V_{total}-V_{displace})/(V_{total}-V_{material})\times100\%$.
(3) Particle size: The particle size was tested using a MS3000 type laser particle size analyzer.

(4) BET specific surface area

The specific surface area of the sample to be tested was obtained by analyzing the data at the medium and low pressure stages in the nitrogen adsorption/desorption curve through the BET formula. The test was performed on an Autosorb IQ2 type full-automatic specific surface area and pore size analyzer manufactured by Anton Paar GmbH, Austria.

(5) Chemical composition analysis was determined using a PEAvio200 type inductively coupled plasma optical emission spectroscopy (ICP-OES).

(6) The tap density was determined according to a universal method for determining the tap density of powder products in GB/T 21354-2008.

(7) Electrochemical performance: The rate performance testing was performed using a LANHECT2001A battery testing system. The test conditions were as follows: the temperature was 25 °C, the voltage range was 3-4.5V, and 1 C=180 mA/g.

Table 1 Test Results of Ternary Cathode Material Precursors

| Test examples | Effective specific pore volume ratio, % | $V_{pore}$, $cm^3/g$ | $D_{50}$, $\mu m$ | Tap density, $g/cm^3$ | BET specific surface area, $m^2/g$ | Na, wt% | S, wt% |
|---|---|---|---|---|---|---|---|
| Example 1 | 86.5 | 0.038 | 10.19 | 2.18 | 6.74 | 0.0211 | 0.1742 |
| Example 2 | 89.8 | 0.046 | 8.64 | 2.26 | 6.92 | 0.0181 | 0.1562 |
| Example 3 | 87.2 | 0.042 | 11.85 | 2.02 | 6.86 | 0.0196 | 0.1657 |
| Example 4 | 82.4 | 0.036 | 10.28 | 2.17 | 6.75 | 0.0215 | 0.1787 |
| Example 5 | 88.4 | 0.058 | 10.05 | 2.25 | 7.11 | 0.0175 | 0.1522 |
| Example 6 | 81.5 | 0.033 | 10.33 | 2.07 | 6.68 | 0.0219 | 0.1751 |
| Example 7 | 75.6 | 0.02 | 10.14 | 1.96 | 6.42 | 0.0259 | 0.2015 |
| Comparative Example 1 | 72.2 | 0.028 | 9.84 | 1.81 | 6.54 | 0.0272 | 0.2082 |
| Comparative Example 2 | 74.7 | 0.02 | 10.08 | 1.82 | 6.47 | 0.0262 | 0.2101 |
| Comparative Example 3 | 68.7 | 0.056 | 10.24 | 1.74 | 7.02 | 0.0248 | 0.2001 |
| Comparative Example 4 | 92.5 | 0.03 | 10.15 | 2.34 | 6.72 | 0.0205 | 0.1684 |
| Comparative Example 5 | 74.1 | 0.043 | 10.26 | 2.11 | 6.81 | 0.0275 | 0.1785 |

Adjusting the ways of the steps (1) and (2) and the reaction parameters may regulate the effective specific pore volume ratio of the spherical ternary cathode material precursor, thereby affecting the tap density and electrochemical performance of the material. Specifically, the denser the crystal seed structure obtained in step (1) and the smaller the particle size, the higher the effective specific pore volume ratio of the obtained precursor; in step (2), the polyanionic surfactant has a better crystal form regulation effect relative to the small molecule surfactant, that is, the obtained precursor has a higher effective specific pore volume ratio, which is due to the more obvious steric effect provided by sodium lignosulphonate; according to the comparison of Examples 1, 5, and 6, where the other conditions are the same, the higher the concentration of the crystal form regulator, the higher the effective specific pore volume ratio of the precursor, and the less the residual amount of impurity elements in the material.

Table 2 Test Results of Ternary Cathode Materials

| Test examples | Effective specific pore volume ratio, % | Tap density, $g/cm^3$ | BET specific surface area, $m^2/g$ | 0.1 C | 1C | | 5 C |
| | | | | Initial discharge specific capacity, mAh/g | Initial discharge specific capacity, mAh/g | Capacity retention rate after 100 cycles, % | Initial discharge specific capacity, mAh/g |
|---|---|---|---|---|---|---|---|
| Example 1 | 82.3 | 2.68 | 0.54 | 201 | 182 | 96 | 153 |

(continued)

| Test examples | Effective specific pore volume ratio, % | Tap density, g/cm³ | BET specific surface area, m²/g | 0.1 C | 1C | | 5 C |
|---|---|---|---|---|---|---|---|
| | | | | Initial discharge specific capacity, mAh/g | Initial discharge specific capacity, mAh/g | Capacity retention rate after 100 cycles, % | Initial discharge specific capacity, mAh/g |
| Example 2 | 87 | 2.88 | 0.58 | 208 | 189 | 85 | 159 |
| Example 3 | 84.1 | 2.76 | 0.55 | 203 | 184 | 88 | 156 |
| Example 4 | 77 | 2.65 | 0.55 | 197 | 170 | 97 | 144 |
| Example 5 | 86.2 | 2.73 | 0.67 | 206 | 190 | 95 | 165 |
| Example 6 | 77.4 | 2.61 | 0.42 | 192 | 167 | 96 | 142 |
| Comparative Example 1 | 68 | 2.31 | 0.57 | 182 | 162 | 95 | 139 |
| Comparative Example 2 | 78.4 | 2.54 | 0.68 | 183 | 149 | 96 | 131 |
| Comparative Example 3 | 64.9 | 2.24 | 0.61 | 179 | 155 | 94 | 130 |
| Comparative Example 4 | 90.8 | 2.92 | 0.64 | 215 | 193 | 82 | 165 |

Comparing Example 1 and Comparative Example 2, the specific surface area of Comparative Example 2 is higher, but the rate performance is lower. Generally, the larger the specific surface area, the larger the contact area between the lithium ions and the electrolyte solution, and the higher the transport efficiency of lithium ions. The reason for this result is that although Comparative Example 2 has a higher specific surface area, it uses small molecules as the crystal form regulator, whose steric effect is too small compared to the macromolecular crystal form regulator, such that the prepared ternary cathode material has a large number of micropores on the surfaces. However, since the wettability of the micropores to the electrolyte solution is not as good as that of mesopores or macropores, the effective contact area with the electrolyte solution is smaller, resulting in inferior rate performance compared to that of Example 1.

Comparing the ternary cathode materials obtained in Example 1 and Example 4, both of which have similar tap densities, but Example 1 has a better effective specific pore volume ratio, and thus has a higher rate performance. First, the similar tap densities indicate that the degrees of the internal compactness of the ternary cathode material are similar. The difference lies in that the volume of the pores that may be wetted by the electrolyte solution in the external open pores of the ternary cathode material is inconsistent. Since the smaller the pore size, the lower the wettability of the pores due to liquid tension, that is, the ternary cathode material in Example 4 has more micropores, while the ternary cathode material in Example 1 has more mesopores or macropores, therefore, the ternary cathode material prepared in Example 1 has higher transport efficiency of lithium ions, and thus better rate performance.

## Industrial Applicability

The effective specific pore volume ratio of the ternary cathode material precursor prepared in the present disclosure is 75% to 90%, which is conducive to reducing the residual amount of impurities in the precursor. When it is used to prepare the cathode materials, it is beneficial for lithium to enter the interior of the material, thereby forming a cathode material with complete crystallization and uniform element distribution. The cathode material prepared therefrom has superior cycle stability and rate performance.

## Claims

1. A ternary cathode material precursor, having a general formula of $Ni_aCo_bM_{1-a-b}(OH)_2$, where $0.3 \leq a < 0.98$, $0 < b < 0.5$, $0 < 1-a-b < 0.5$, and M is at least one of Mn or Al; wherein the ternary cathode material precursor comprises effective pores which water is allowed to enter under a standard atmospheric pressure and ineffective pores which water is not allowed to enter under a standard atmospheric pressure; the ternary cathode material precursor has an effective specific pore volume ratio of 75% to 90%; and
wherein the effective specific pore volume ratio = $V_{effective}/V_{pore} \times 100\%$, $V_{effective}$ represents a specific pore volume of the effective pores in $cm^3/g$, $V_{ineffective}$ represents a specific pore volume of the ineffective pores in $cm^3/g$; and $V_{pore} = V_{effective} + V_{ineffective}$.

2. The ternary cathode material precursor according to claim 1, wherein the ternary cathode material precursor satisfies at least one of the following (1) to (6):

(1) $V_{pore}$ is 0.01 $cm^3/g$ to 0.06 $cm^3/g$;
(2)

$$V_{effective}=V_{total}-V_{displace}, \ V_{pore}=V_{total}-V_{material};$$

wherein,

$$V_{total}=V_{material}+V_{effective}+V_{ineffective},$$

and $V_{total}$ represents a volume of mercury displaced per unit mass of the ternary cathode material precursor when immersed in mercury, in $cm^3/g$;

$$V_{displace}=V_{material}+V_{ineffective},$$

and $V_{displace}$ represents a volume of water displaced per unit mass of the ternary cathode material precursor when immersed in water, in $cm^3/g$; and
$V_{material}$ is a reciprocal of a density of the ternary cathode material precursor;

(3) test processes of $V_{effective}$ and $V_{pore}$ are each performed at a temperature of 4 °C to 80 °C;
(4) the ternary cathode material precursor has a $D_{50}$ of 8 $\mu$m to 12 $\mu$m;
(5) the ternary cathode material precursor has a specific surface area of 6.4 $m^2/g$ to 7.5 $m^2/g$; and
(6) the ternary cathode material precursor has a tap density of 1.9 $g/cm^3$ to 2.3 $g/cm^3$.

3. The ternary cathode material precursor according to claim 1 or 2, wherein a total weight percentage of sodium and sulfur elements in the ternary cathode material precursor is less than 0.21 wt%; and/or,

a weight percentage of sodium element in the ternary cathode material precursor is less than 0.03 wt%; and/or,
a weight percentage of sulfur element in the ternary cathode material precursor is less than 0.21 wt%.

4. A method for preparing the ternary cathode material precursor according to any one of claims 1 to 3, comprising:

preparation of crystal seeds: preparing nanocrystal seeds of the ternary cathode material precursors by a coprecipitation method under supergravity conditions; and
growth of crystal seeds: growing the nanocrystal seeds to obtain the ternary cathode material precursor.

5. The method for preparing the ternary cathode material precursor according to claim 4, wherein steps of the preparation of the crystal seeds comprise: placing ammonia water with a pH of 10 to 11 as a reaction base solution in a rotating bed reactor, adding a nickel-cobalt-M mixed salt solution and a mixed aqueous solution containing a precipitant and a complexing agent placed in two liquid storage tanks of the rotating bed respectively to the rotating bed reactor in a cocurrent flow to maintain a pH at 10.5 to 11.5, stopping feeding and rotating of the rotating bed when a precipitate reaches a first preset particle size, then standing and aging to obtain a first reaction solution containing the crystal seeds; wherein the steps of the preparation of the crystal seeds further satisfies at least one of the following A to I:

A: the first preset particle size has a $D_{50}$ of 200 nm to 500 nm;
B: in the mixed aqueous solution, the precipitant has a concentration of 3 mol/L to 5 mol/L, the complexing agent has a concentration of 1.5 mol/L to 2.5 mol/L;
C: the rotating bed has a rotation speed of 1000 rpm to 1500 rpm;
D: the salt in the nickel-cobalt-M mixed salt solution is one of nitrate, hydrochloride or sulfate;

E: a molar ratio of nickel, cobalt and M is 35-98:1-35:1-35;

F: a total concentration of the nickel, cobalt and M elements in the nickel-cobalt-M mixed salt solution is 1.5 mol/L to 2.5 mol/L;

G: the nickel-cobalt-M mixed salt solution has a flow rate of 50 mL/min to 100 mL/min;

H: the precipitant is potassium hydroxide or sodium hydroxide; and

I: the complexing agent is one of ammonia water, ammonium nitrate, ammonium sulfate and ammonium chloride.

6. The method for preparing the ternary cathode material precursor according to claim 4 or 5, wherein steps of the growth of the crystal seeds comprises: adjusting a pH of the first reaction solution containing the crystal seeds to 9.5 to 10.5; adding the nickel-cobalt-M mixed salt solution, an aqueous solution of a crystal form regulator, and the mixed aqueous solution containing the precipitant and the complexing agent to the first reaction solution containing the crystal seeds to obtain a second reaction solution; maintaining a pH of the second reaction solution at 9.5 to 10.5 and a concentration of ammonia at 0.4 mol/L to 0.8 mol/L; and stopping feeding when a precipitate reaches a second preset particle size, then standing and aging to obtain a slurry containing the ternary cathode material precursor; wherein the steps of the growth of the crystal seeds further satisfies at least one of the following a-f:

a: the crystal form regulator is an anionic surfactant;

b: a concentration of the aqueous solution of the crystal form regulator is 0.01 mol/L to 0.05 mol/L;

c: the nickel-cobalt-M mixed salt solution has a flow rate of 0.2 mL/min to 0.5 mL/min;

d: the aqueous solution of the crystal form regulator has a flow rate of 0.2 mL/min to 0.5 mL/min;

e: the second preset particle size has a $D_{50}$ of 8 $\mu$m to 12 $\mu$m; and

f: the steps further comprises: subjecting the slurry containing the ternary cathode material precursor to solid-liquid separation, and then washing a resulting solid phase successively with an alkali solution and pure water, followed by drying, sieving and demagnetizing to obtain the ternary cathode material precursor.

7. The method for preparing the ternary cathode material precursor according to claim 6, wherein the crystal form regulator is selected from the group consisting of sodium polyacrylate and sodium lignosulfonate; and/or, the alkali solution is a sodium hydroxide solution or a potassium hydroxide solution with a concentration of 50 g/L to 70 g/L and a temperature of 50 °C to 80 °C.

8. A ternary cathode material, obtained by mixing the ternary cathode material precursor according to any one of claims 1 to 3 or the ternary cathode material precursor prepared by the preparation method according to any one of claims 4 to 7 with a lithium source and then calcining a resulting mixture, wherein the ternary cathode material further satisfies at least one of the following g-i:

g: the ternary cathode material has an effective specific pore volume ratio of 75% to 90%;

h: the ternary cathode material has a specific surface area of 0.4 m²/g to 0.7 m²/g; and

i: the ternary cathode material has a tap density of 2.6 g/cm³ to 2.9 g/cm³.

9. The ternary cathode material according to claim 8, wherein the ternary cathode material has an initial discharge specific capacity of 192 mAh/g to 208 mAh/g at 1 C; and/or,

the ternary cathode material has an initial discharge specific capacity of 167 mAh/g to 190 mAh/g at 1 C; and/or,

the ternary cathode material has a capacity retention rate after 100 cycles of 85% to 97% at 1 C; and/or,

the ternary cathode material has an initial discharge specific capacity of 142 mAh/g to 165 mAh/g at 5 C.

10. A method for preparing the ternary cathode material according to claim 8 or 9, wherein the ternary cathode material is obtained by mixing the ternary cathode material precursor according to any one of claims 1 to 3 or the ternary cathode material precursor prepared by the preparation method according to any one of claims 4 to 7 with a lithium source and then calcining a resulting mixture.

11. The method for preparing the ternary cathode material according to claim 10, wherein the calcination is carried out at 400 °C to 800 °C for 15 h to 20 h.

12. The method for preparing the ternary cathode material according to claim 10 or 11, wherein the calcination comprises a first stage calcination and a second stage calcination, wherein the first stage calcination is carried out at 400 °C to 600 °C for 4 h to 6 h; and the second stage calcination is carried out at 750 °C for 10 h to 14 h.

13. The method for preparing the ternary cathode material according to any one of claims 10 to 12, wherein a heating rate of the calcination is 1.5 °C/min to 2.5 °C/min.

14. A cathode sheet, comprising the cathode material according to claim 8 or 9.

15. A cell, comprising the cathode sheet according to claim 14.

16. A lithium-ion battery, comprising the cathode sheet according to claim 14.

17. An electrical device, comprising the lithium-ion battery according to claim 16.

Figure 1

Figure 2

Figure 3

Figure 4

## INTERNATIONAL SEARCH REPORT

| | International application No. |
|---|---|
| | **PCT/CN2024/126157** |

**A.    CLASSIFICATION OF SUBJECT MATTER**

C01G53/00(2025.01)i;  H01M4/505(2010.01)i;  H01M10/0525(2010.01)i;  H01M4/131(2010.01)i;  H01M4/525(2010.01)i

According to International Patent Classification (IPC) or to both national classification and IPC

**B.    FIELDS SEARCHED**

Minimum documentation searched (classification system followed by classification symbols)

IPC:C01G,H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 前驱体, 正极, 孔隙率, 闭孔, 开孔, 有效孔, 疏松, 致密, 超重力, 共沉淀, precursor, positive, porosity, closed hole, open hole, loose, dense, supergravity, precipitat+

**C.    DOCUMENTS CONSIDERED TO BE RELEVANT**

| Category* | Citation of document, with indication, where appropriate, of the relevant passages | Relevant to claim No. |
|---|---|---|
| PX | CN 118221179 A (GUANGDONG BRUNP RECYCLING TECHNOLOGY CO., LTD. et al.) 21 June 2024 (2024-06-21) description, paragraphs 24-139 | 1-17 |
| X | CN 117125747 A (NINGBO RONBAY NEW ENERGY TECHNOLOGY CO., LTD.) 28 November 2023 (2023-11-28) description, paragraphs 5-162, and figures 1-7 | 1-17 |
| Y | CN 117125747 A (NINGBO RONBAY NEW ENERGY TECHNOLOGY CO., LTD.) 28 November 2023 (2023-11-28) description, paragraphs 5-162, and figures 1-7 | 4-17 |
| Y | CN 106241894 A (XIANGTAN UNIVERSITY) 21 December 2016 (2016-12-21) description, paragraphs 11-28 | 4-17 |
| A | CN 112652751 A (JINGMEN GEM NEW MATERIAL CO., LTD.) 13 April 2021 (2021-04-13) entire document | 1-17 |
| A | JP 2016149258 A (JX NIPPON MINING & METALS CORP.) 18 August 2016 (2016-08-18) entire document | 1-17 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 January 2025** | **27 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/126157**

## C. DOCUMENTS CONSIDERED TO BE RELEVANT

| Category* | Citation of document, with indication, where appropriate, of the relevant passages | Relevant to claim No. |
|---|---|---|
| A | JP 2014067546 A (NGK INSULATORS, LTD.) 17 April 2014 (2014-04-17)<br>entire document | 1-17 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 118221179 | A | 21 June 2024 | CN | 118221179 | B | 10 September 2024 |
| CN | 117125747 | A | 28 November 2023 | None | | | |
| CN | 106241894 | A | 21 December 2016 | CN | 106241894 | B | 17 October 2017 |
| CN | 112652751 | A | 13 April 2021 | CN | 112652751 | B | 11 January 2022 |
| JP | 2016149258 | A | 18 August 2016 | JP | 6407754 | B2 | 17 October 2018 |
| | | | | WO | 2016129361 | A1 | 18 August 2016 |
| JP | 2014067546 | A | 17 April 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410649899